# EUROPÄISCHE PATENTSCHRIFT

(11) **EP 1 433 541 B1**
(45) Veröffentlichungstag und Bekanntmachung des Hinweises auf die Patenterteilung: **11.05.2005**
(21) Anmeldenummer: 04005366.2
(22) Anmeldetag: 12.01.2001
(51) Int. Cl.: B07C 5/344, B07C 5/342, B03B 9/06

(54) **Vorrichtung zum Ausblasen von metallischen Fraktionen aus einem Schüttgutstrom**
Device for ejecting metal fractions from a stream of bulk material
Dispositif pour éjecter les fractions metalliques d'un flux de matières en vrac

(30) Priorität: 27.01.2000 DE 10003562
(43) Veröffentlichungstag der Anmeldung: 30.06.2004
(62) Teilanmeldung aus: 01911348.9
(73) Patentinhaber: CommoDas GmbH, 22880 Wedel (DE)
(72) Erfinder: Harbeck, Hartmut, 22880 Wedel (DE); Petzold, Günther, 25462 Rellingen (DE); Reischmann, Gerd, 25436 Tornesch (DE)
(74) Vertreter: Biehl, Christian, Dipl.-Phys.

(56) Entgegenhaltungen:
- EP-A- 0 353 457
- EP-A- 0 876 852
- DE-A- 3 513 664

## Beschreibung

Die Erfindung betrifft eine Vorrichtung zum Ausblasen von metallischen Fraktionen aus einem Schüttgutstrom nach dem Oberbegriff des unabhängigen Anspruchs.

Metallische Fraktionen müssen aus verschiedensten Schüttgutströmen aussortiert bzw. separiert werden. Im einfachsten Fall sind dies Kronenkorken von Bierflaschen und Aluminiumteile aus einem Schüttgutstrom gebrochenen Glases. Aber auch inhomogenere Schüttgutströme, beispielsweise geschredderte Autoteile müssen nach ihren verschiedenen Metall- und Nichtmetallfraktionen sortiert werden. Insbesondere die Edelstahlfiraktion ist dabei von anderen Fraktionen zu trennen. Edelstahl ist dabei ebenso wie Nicht-Eisen-Metalle wenig ferromagnetisch.

Ein gattungsgemäßes Verfahren ist dabei in der DE-A1 35 13 664 beschrieben, bei dem eine in ihrer Induktanz veränderliche Detektorspule an einer Müllrutsche eine Druckluftdüse steuert, die Nichteisenmetalle wegbläst. Abgesehen von der geringen örtlichen Auslösung, die gerade noch zur Erkennung von Aluminiumdosen ausreicht, besteht das Problem, daß verschieden starke Induktanzänderungen bei verschiedenen Materialien aber auch verschiedenen Objektgrößen keine klare Aussage über den optimalen Ausblaszeitpunkt zulassen. Weiter kann nur stets eine bestimmte Fraktion ausgeblasen werden, und nicht - bei Vorliegen anderer Zusammensetzungen - die gering Vorhandene Fraktion, zu deren Ausblasen nur geringerer Auswand zu treiben ist.

Das Ausblasen von Nichtmetallen ist überhaupt nicht möglich, obwohl gerade dies bei zerkleinertem Autoschrott sehr erwünscht ist.

Durch Sättigungeffekte kann zudem ein eine starke Induktanzänderung bewirkendes Teilchen die Spule für einen derart langen Zeitraum desensibilisieren, daß erhebliche Fehlsortierung oder äußerst langsame Fördergeschwindigkeit in Kauf genommen werden müssen.

Verfahren, wie sie beispielsweise in der deutschen Offenlegungsschrift DE-A1 40 14 969 beschrieben werden, sind daher wenig geeignet, Metall richtig zu detektieren und verschiedene Metallfraktionen unterschiedlich zu behandeln.

Zudem erfordert die parallele Erkennung sowohl der Farbe als auch des Vorhandenseins von Metall erhebliche Zeit, die, wie in der DE-A1 40 17 129 beschrieben, auch eine langsame Schüttgutfördergeschwindigkeit bedingt.

Andere Vorschläge, wie beispielsweise in der DE-A1 42 35 956, bei der die Oberflächen-Feinstruktur der Materialien durch Bestrahlung mit elektromagnetischen Wellen erfaßt wird, sind ebenfalls bei der Auswertung viel zu aufwendig und erfordern eine zeitaufwendige Logikbetrachtung. Es wurden weiter bereits Vorschläge zur Erhöhung der Trennschärfe bei Materialgemischen, wie beispielsweise in dem deutschen Gebrauchsmuster DE-U 93 09 786 gemacht.

In der DE-A1 40 17 274 wird schließlich eine Vorrichtung zum Erkennen und Ausscheiden von Metallteilchen beschrieben, bei der verschiedene Fallkanäle mit Detektorspulen versehen sind, die je eine Klappenmechanik zur Umlenkung rieselfähigen Schüttguts steuern. Bei geschreddertem Material, beispielsweise Autoschrott entstehen jedoch unvermeidbar auch einige deutlich über der Nenngröße liegende Bestandteile, die solche Kanäle sofort blockieren würden. Ohnehin neigen diese Kanäle auch bei Schüttgut dazu, zu verstopfen.

Wünschenswert ist außerdem, in Abhängigkeit von dem jeweils zu sortierenden Schüttgut die Trennschärfe nachregulieren zu können, um den unterschiedlichen Schüttgutvoraussetzungen Rechnung zu tragen und die jeweils gewünschten Anteile aussortieren zu können.

So ist beispielsweise bekannt, daß sich schon geschredderter Autoschrott je nach Herkunftsland erheblich unterscheidet. Während in europäischem Autoschrott viele Leichtmetalle und Plastikbestandteile vorhanden sind, finden sich im Schrott USamerikanischer Wagen wesentlich mehr Edelmetallbestandteile, deren Aussortierung dementsprechend hier besonders lohnt.

Weiter ist bekannt, daß die Größe und Form der zu sortierenden Teile außer von den in den Fahrzeugen verwandten Materialien auch von der Art der Schreddermaschine abhängt. Ist jedoch eine erste Charge von einem bestimmten Vorverarbeitungsbetrieb einmal angeliefert worden, ist in aller Regel davon auszugehen, daß über lange Zeit (die nächsten Jahre) Teile in ähnlicher Größe und Form eintreffen und die Sortierparameter beim Betrieb der Sortiervorrichtung daher im wesentlichen gleich bleiben.

Aus EP-A-0 876 852 ist eine Vorrichtung gemäß dem Oberbegriff des unabhängigen Anspruchs bekannt.

Der Erfindung liegt nun die Aufgabe zugrunde eine Vorrichtung zum Aussortieren dieser metallischen Fraktionen zu schaffen, wobei das Aussortieren schnell und auch für größere Teile sicher erfolgen soll.

Gerade für größere Teile ist es notwendig, die Ausblasdüsen so zu steuern, daß die Teile richtig angeblasen werden, da zu kurzes oder zu frühes Anblasen (wie es sich durch frühes Ansprechen der Metalldetektoren aus dem Stand der Technik bei großen Objekten ergibt) wird die Teile nicht richtig in eine neue Flugbahn bringen. Auch entstehen beim Shreddern viele längliche Teile, die schwer auszublasen sind.

Erfindungsgemäß wird dies durch die Merkmale des Hauptanspruches gelöst. Die Unteransprüche geben vorteilhafte Ausführungsformen der Erfindung wieder.

Insbesondere ist vorteilhaft, daß durch die erfindungsgemäße Anordnung eines elektromagnetischen Sensors unterhalb vorteilhafterweise eines horizontal verlaufenden Förderbandes nicht nur das Digitalsignal, Metall : JA / NEIN, sondern auch ein Signalverlauf erfaßbar ist, aus dessen Details, insbesondere aus dessen Flankenanstieg, man gegebenenfalls auf die Größe und das Material des einzelnen Teils schließen kann.

Durch die Lage der im wesentlichen flächigen Teile auf dem Förderband kann der Abstand des Massenschwerpunktes zum Sensor dabei als gleich für alle Teile betrachtet werden.

Durch den im zweiten Teil der Beschreibung anhand der Zeichnung näher beschriebenen Sensor wird es möglich, Wirbelströme in einem auszusondernden Metallteil zu erzeugen, insbesondere solchen aus Aluminium oder Edelstahl, die dann ihrerseits ein magnetisches Feld aufbauen, das dem Erregungsfeld entgegenwirkt. Durch den Aufbau des Feldes, insbesondere aber durch die Leitungsverluste, die die Wirbelströme im Metall erfahren, wird ein Energieverlust im felderzeugenden Sensor bewirkt, der als Bedämpfung dieses Oszillators ein Grad für Maß, Abstand und Größe des Objektes ist. Die einzelnen auszusortierenden Partikel werden dabei durch die Wirbelströme ein wenig erwärmt.

Zwar ist bisher schon die Erzeugung entgegenwirkender Felder durch Wirbelströme, induziert durch sehr starke Felder dazu benutzt worden, Teile, in denen die Wirbelfelder entstehen, aus einer Fallbahn auszulenken, allerdings ist diese Auslenkung durch die Geometrie des Objektes und die in dem Objekt fließenden Wirbelströme bestimmt und weniger durch das Material selbst und auch keineswegs in ihrer Richtungskomponente optimal.

Die Erfindung dagegen "vermißt" das Teilchen und steuert eine Ausblasdüsenleiste an, die das Teilchen mit geeignetem Luftstrom zum Auswurf während einer Fallstrecke versieht, die z.B. einem horizontal verlaufenden Förderband nachgeschaltet ist. Damit ist für die ausgewählten Teilchen eine stets gleiche Flugbahn wesentlich besser sichergestellt, als durch ein sehr starkes Feld, das Wirbelströme in allen Objekten in unterschiedlicher Stärke zur Abstoßung induziert.

Zudem wird es mit der Erfindung möglich, die Daten, die zu einem Objekt erfaßt werden, nämlich Größe, Stärke des verursachten Wirbelstroms (die Steilheit des Anstiegs einer Flanke im Signalverlauf läßt auf diesen zurückschließen) rechnerisch auszuwerten, wobei die Stärke der Rückmeldung des Objektes, d.h. entweder seine Masse oder bei vergleichbaren Massen der Teilchen sein Material, durch
1.) rechnerische Integration über die Fläche eines "Peaks" bestimmt werden kann,
   oder - was apparativ bei der Anlage leicht zu bewerkstelligen ist - durch
2.) Änderung der Entfernung des veränderten Sensors zum Schüttgutstrom Berücksichtigung finden kann,
so daß in beiden Fällen die Ansprechgrenzen zur Separierung leicht geändert werden können.

Einen großen Vorteil bietet die optionale optische Erfassung der Teilchen auf dem Band oder auch am Beginn der Fallstrecke, denn sie bietet die Möglichkeit der genaueren Lageinforrnation, die wiederum über die sehr viel dichter als die Spulen angeordneten, mit exakt bestimmten Wirkungspunkten versehenen Luftdüsen auf die Schwerpunkte der Teilchen zu blasen und damit eine optimale Flugbahnänderung zu bewirken.

Durch eine Mehrzahl von Sensoren, die nebeneinander quer zum Schüttgutstrom angeordnet werden, kann der gesamte Schüttgutstrom überwacht werden, und zu den optisch erfaßten Objekten eine weitere - die Metall/kein Metall - Information ermittelt werden und bei genügender Trennschärfe anhand der Objektgröße und der Sensorinformation auch eine Entscheidung über die Art des Metalls möglich werden.

Da die Feldverteilung einer jeden LC-Sensorspule zum Rand hin stark abnimmt, wird vorgeschlagen, wenigstens zwei zueinander versetzt angeordnete Reihen vorzusehen.

Weiter schlägt die Erfindung vor, außer den Sensoren im gleichen Abstand zum Schüttgutstrom weitere Sensoren in anderen Abständen zum Schüttgutstrom anzuordnen, um so Fraktionen mit wesentlich anderem Ansprechreichweiten im Schüttgutstrom zu erkennen und damit das Aussortieren bestimmter Fraktionen zwischen Ober- und Untergrenzen zu ermöglichen.

Es können jedoch auch zusätzlich optoelektronische Sensoren vorgesehen werden, die die aus der elektromagnetischen Erkennung erhaltenen Signale mit optoelektronisch erfaßten Signalen, d.h. beispielsweise Größe und Farbe des Objektes qualifizieren können.

Ein weiterer Vorteil der Erfindung ist die Möglichkeit der Logikumkehr, d.h. entweder Ausblasen der verwertbaren Metallfraktion oder Ausblasen der verwertbaren Kunststofffraktion, je nachdem, was die gewünschte, marktgängige Fraktion sortenreiner liefert.

Weitere Merkmale und Vorteile der Erfindung ergeben sich aus der Zeichnung. Dabei zeigt:
- Fig.1: eine schematische Darstellung einer Sortiervorrichtung, und
- Fig.2: eine der Geometrie der Spulenanordnung.

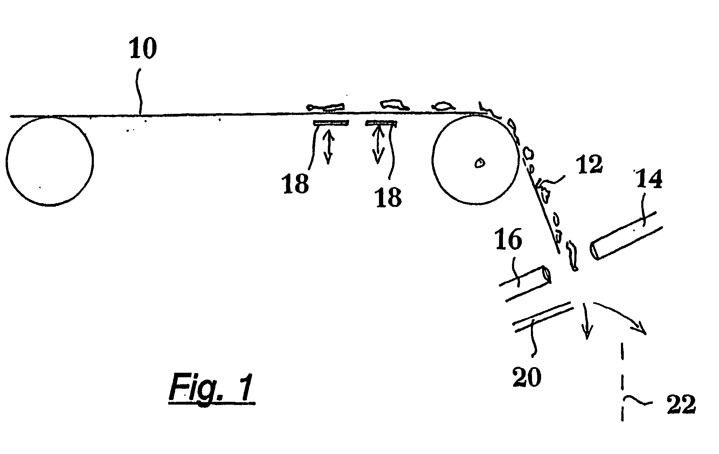

Die Vorrichtung weist wie in der Fig. 1 schematisch angedeutet schüttgutfördernde Mittel 10, ein Förderband, auf, an das sich optional eine Fallrutsche 12 im ersten Teil einer Fallstrecke zur Parallelisierung der einzelnen Teilchen anschließt.

Im freien Fall werden dann die einzelnen Objekte durch eine Zeilenkamera 14 erfaßt, die zeilenweise den Objektstrom abbildet und deren Signale an eine Elektronik geleitet werden, die mit einer Auswertung einer Mehrzahl von Zeilen einzelne Objekte erkennt und diese Objekte in Farb- und u.U. Formklassen einteilt und vor allem zu jedem Objekt die jeweilige Sensorinformation aus den Detektorspulen 18 erfaßt, um daraus ein ortsgenaues Ausblaskommando an eine Reihe von Ausblasdüsen 20 zu geben.

Die Ausblasdüsen 20 können so auch längliche Objekte und solche, bei denen die Sensorspulen 18 nicht ansprachen, ausblasen, indem die Flugbahn z.B. nach rechts hinter eine Trennwand 22 verändert wird.

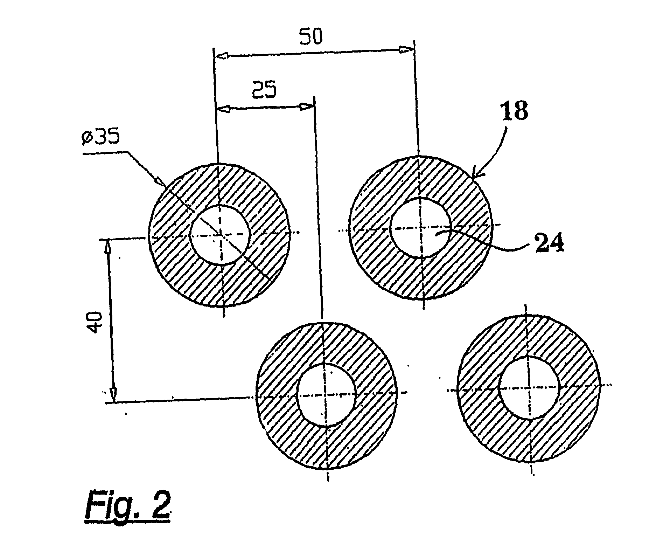

Da die Sensorspulen 18 am Rand ein schlechteres Ansprechverhalten als in der Mitte aufwesen, wird vorgeschlagen, sie in zwei zueinander auf Lücke versetzten Reihen anzuordnen. Der zeitliche Versatz beim Ansprechen auf (in Fig. 2 von oben nach unten passierende) Schüttgutteilchen kann ohne großen Aufwand durch Signalverarbeitungsmittel auf dem Weg zur Steuerungselektronik ausgeglichen werden.

Das die Mehrzahl von als LC-Schwingkreis ausgeführten Sensorspulen 18 unter einem im wesentlichen horizontalen Abschnitt des Schüttgutstrom vorgesehen ist, hat den Vorteil, daß die sehr stark in das Ergebnis eingehende Abstandsvariable zur Spule so am geringsten von einem Objekt zum nächsten variiert, da diese meist mit ihrem Schwerpunkt am nächsten zum Förderband zu liegen kommen.

Durch die Schwingkreise werden hochfrequent Wirbelströme induziert, deren Anwesenheit eine Bedämpfung der Spulen 18 verursacht, die die Anwesenheit eines Metallteilchens signalisiert, aber sich noch nicht zur Bestimmung der Ausblasposition eignet. Selbst eine Vielzahl von Sensorreihen liefert diese Information nur unzureichend, so daß zusätzliche optoelektronische Mittel, nämlich die Zeilenkamera 14 zur Ortserfassung eines jeden Schüttgutteilchens vorgesehen sind. Eine Beleuchtung 16 kann dabei im Durchlicht oder auch im Auflicht vorgesehen werden. Auch können Kamera 14, Beleuchtung 16 und auch die Ausblasdüsen 20 auf der gegenüber der Darstellung in Fig. 1 gegenüberliegenden Seite der Flugbahn angeordnet werden, oder es können zur Betrachtung sowohl der Vorder- wie der Rückseite zwei oder mehr Kameras zum Einsatz kommen. Eine solche Variante eignet sich besonders zum richtigen Aussortieren von Verbundmaterialien, wie sie bei Autoschrott in zunehmendem Maße auftreten.

Bei Verbundmaterialien wird dabei erkannt werden können, ob z.B. Schläuche mit Metallschellen vorhanden sind, wobei in der Software der Anlage eine Vorbestimmung getroffen werden kann, diese einer Fraktionen zuzuführen. Es kann dabei gewünscht sein, sie entweder wegen des kleinen Metallteils der Metallfraktion oder aber wegen des überwiegenden Gummianteils der Nichteisenfraktion zuzuführen.

Vorteilhaft ist es, möglichst kleine Sensorspulen 18 hochfrequent in der Größenordnung von 100 kHz zu betreiben. Damit ergibt sich, wie in Fig. 2 angedeutet, bei Spulenabmessungen von 35 mm und einem Abstand von Mittelpunkt zu Mittelpunkt in einer Reihe von 50 mm ein Sensorraster von 25 mm, also eine Überlappung von jeweils 10 mm auf jeder Seite der Spule. Dies entspricht dem schraffierten Außenbereich.

Bei einer Arbeitsbreite von z.B. 1200 mm und einer Produktgeschwindigkeit von 2,0 m/s ergibt sich bei einer Anzahl von 48 Sensoren pro Zeile und einer Abtastrate von 0,2 kHz bei einer Teilchengröße von 50 mm eine Anzahl von acht Meßwerten pro Teilchen, die eine Auswertung der Flanken des Signals gut ermöglichen.

Die Bildverarbeitung kann dann die Vertikalauflösung der Metallsensorik von 10 mm auf 1 mm verbessern, da hier mit einem Raster von 0,5 mm und einer Abtastrate von 2 kHz gearbeitet werden kann.

Die Sensorspulen 18 sind dabei in einem die Feldlinien eng gebündelt nach oben durch eine offene Endseite abstrahlenden Topf angeordnet, der einstückig mit einem mittig senkrecht angeordneten Ferritkern 24 (Durchmesser ca. 10 mm) ausgebildet ist.

Die Betriebsspannung liegt vorteilhafterweise bei 20 - 30 V Gleichspannung und zum Einstellen der Ansprechempfindlichkeit sind neben einem Potentiometer Mittel zum Verlagern der Sensorspulen 18 einer Zeile vom Schüttgutstrom weg in verschiedene Entfernungen zu diesem vorgesehen.

Dies wird apparativ durch eine über Spindelantriebe fein justierbare vertikale Schublade für je eine Zeile von Sensorspulen 18 erreicht, die auch programmgesteuert schneller durch Elektromagneten in wenigstens zwei verschiedene Ebenen verlagerbar ist.

Die von je einer Spule empfangenen Signale werden über einen Demodulator einer Triggerschaltung zur Signalsauswertung bezüglich der Signalhöhe zugeführt.

## Patentansprüche

1. Vorrichtung zum Ausblasen von metallischen Fraktionen aus einem durch schüttgutfördernde Mittel (10) bewegten Schüttgutstrom, mit an einer Fallstrecke angeordneten Ausblasdüsen (20), die entlang der Breitenerstreckung des Schüttgutstromes zum Anblasen einzelner Schüttgutteilchen angeordnet sind, zur Veränderung der Flugbahn in einen zweiten, abgezweigten Teilstrom hinein, wobei die Ausblasdüsen (20) in Abhängigkeit von Sensorspulenabtastungsergebnissen der Schüttgutteilchen ansteuerbar sind, **dadurch gekennzeichnet, daß**
eine Mehrzahl von als LC-Schwingkreis ausgeführten Sensorspulen (18) unter einem im wesentlichen horizontalen Abschnitt des Schüttgutstrom vorgesehen sind zur Erfassung der induzierten Wirbelströme und weiter zur Bestimmung der Ausblasposition zusätzlich optoelektronische Mittel (14) zur Ortserfassung eines jeden Schüttgutteilchens vorgesehen sind,
wobei die Sensorspulen (18) in einem die Feldlinien eng gebündelt nach oben durch eine offene Endseite abstrahlenden Topf angeordnet sind.

2. Vorrichtung nach Anspruch 1, **dadurch gekennzeichnet, daß** die Sensorspulen (18) hochfrequent in der Größenordnung von 100 kHz betreibbar sind.

3. Vorrichtung nach einem der vorangehenden Ansprüche, **dadurch gekennzeichnet, daß** der die Sensorspulen (18) in einem die Feldlinien eng gebündelt nach oben durch eine offene Endseite abstrahlende Topf einstückig mit einem mittig senkrecht angeordneten Ferritkern (24) ausgebildet ist.

4. Vorrichtung nach einem der vorangehenden Ansprüche, **dadurch gekennzeichnet, daß** die Sensorspulen (18) in wenigstens zwei Zeilen quer zum Schüttgutstrom "auf Lücke versetzt" angeordnet sind.

5. Vorrichtung nach einem der vorangehenden Ansprüche, **dadurch gekennzeichnet, daß** die Sensorspulen (18) in jeder Zeile gemeinsam vom Schüttgutstrom weg in verschiedene Distanzen versetzbar sind.

6. Vorrichtung nach einem der vorangehenden Ansprüche, **dadurch gekennzeichnet, daß** die von einer Sensorspule (18) erzeugten Signale über einen Demodulator einer Triggerschaltung zur Auswertung bezüglich der Signalhöhe zugeführt sind, und die Sensorspulen (18) in ihrem Vertikalabstand zu einem horizontal angeordneten Schüttgutförderband versetzbar sind.

## Claims

1. Apparatus for blowing metal fractions out of a bulk material stream moved by bulk material-conveying means (10) and having blow-out nozzles (20) located on a drop section and positioned along the width extension of the bulk material stream for blowing individual bulk material particles, for modifying the trajectory into a second, branched off partial flow, the blow-out nozzles (20) being controllable as a function of sensor coil scanning results of the bulk material particles, **characterized in that**
a plurality of sensor coils (18) in the form of a LC resonant circuit are provided under a substantially horizontal portion of the bulk material stream for detecting the induced eddy currents and for determining the blow-out position additional optoelectronic means (14) are provided for detecting the location of each bulk material particle,
the sensor coils (18) being located in a pot emitting the field lines in closely concentrated manner upwards through an open end side.

2. Apparatus according to claim 1, **characterized in that** the sensor coils (18) are operable at a high frequency of approximately 100 kHz.

3. Apparatus according to one of the preceding claims, **characterized in that** the pot containing the sensor coils (18) and emitting the field lines in closely concentrated manner upwards through an open end side is constructed in one piece with a centrally vertically positioned ferrite core (24).

4. Apparatus according to one of the preceding claims, **characterized in that** the sensor coils (18) are mutually displaced transversely to the bulk material stream in at least two rows.

5. Apparatus according to one of the preceding claims, **characterized in that** the sensor coils (18) in each row can be jointly moved away from the bulk material stream by different distances.

6. Apparatus according to one of the preceding claims, **characterized in that** the signals generated by a sensor coil (18) can be supplied via a demodulator to a trigger circuit for evaluation with respect to the signal level and the sensor coils (18) can be displaced in their vertical spacing with respect to a horizontally positioned bulk material conveyor belt.

## Revendications

1. Dispositif pour éjecter des fractions métalliques d'un flux de matière en vrac déplacé par un moyen de transport de matière en vrac (10), avec des buses d'éjection (20) situées dans une section de chute, qui sont disposées le long de l'extension en largeur du flux de matière en vrac pour souffler certaines particules de la matière en vrac afin de modifier leur trajectoire en direction d'un deuxième flux partiel dérivé, les buses d'éjection (20) pouvant être commandées individuellement en fonction de résultats de palpation des particules de matière en vrac par des bobines détectrices, **caractérisé par le fait**
**qu'**il est prévu une pluralité de bobines détectrices (18) réalisées sous la forme de circuits oscillants LC sous une section essentiellement horizontale du flux de matière en vrac pour la saisie des courants de Foucault induits et qu'il est prévu en outre pour la détermination de la position d'éjection des moyens optoélectroniques supplémentaires (14) pour la localisation de chaque particule de matière en vrac,
les bobines détectrices (18) étant disposées dans un pot rayonnant les lignes de champ étroitement concentrées vers le haut à travers une extrémité ouverte.

2. Dispositif selon la revendication 1, **caractérisé par le fait que** les bobines détectrices (18) sont exploitables ou excitables à haute fréquence de l'ordre de grandeur de 100 kHz.

3. Dispositif selon l'une des revendications précédentes, **caractérisé par le fait que** le pot rayonnant les lignes de champ étroitement concentrées vers le haut à travers une extrémité ouverte est formé d'une seule pièce avec un noyau en ferrite (24) placé verticalement au centre.

4. Dispositif selon l'une des revendications précédentes, **caractérisé par le fait que** les bobines détectrices (18) sont disposées en au moins deux lignes, perpendiculairement au flux de matière en vrac et décalées en quinconce.

5. Dispositif selon l'une des revendications précédentes, **caractérisé par le fait que** les bobines détectrices (18) peuvent être déplacées dans chaque ligne en commun à différentes distances du flux de matière en vrac.

6. Dispositif selon l'une des revendications précédentes, **caractérisé par le fait que** les signaux générés par une bobine détectrice (18) sont amenés via un démodulateur à un circuit de déclenchement pour l'évaluation du niveau du signal et que les bobines détectrices (18) peuvent être déplacées dans leur distance ou écartement vertical(e) par rapport à une bande transporteuse de matière en vrac disposée horizontalement.
